# EUROPEAN PATENT APPLICATION

(11) **EP 2 000 442 A2**
(43) Date of publication of application: **10.12.2008**
(21) Application number: 08157777.7
(22) Date of filing: 06.06.2008
(51) Int. Cl.: C03B 37/083, C03B 37/095

(54) **Device for producing fibers and method for producing mineral fibers using the device**

(30) Priority: 06.06.2007 IT MI20071154
(71) Applicant: Diatech S.r.l., 20063 Cernusco Sul Naviglio (MI) (IT)
(72) Inventor: Siano, Dante, 20093 Cologno Monzese MI (IT)
(74) Representative: Modiano, Micaela Nadia

(57) **Abstract**

A use of iron-chromium-aluminum alloys, optionally reinforced with dispersed oxides, to provide devices, particularly bushings and/or nozzles, suitable for producing mineral fibers, particularly glass and basalt fibers, as a replacement of the precious metals and/or alloys thereof currently used. A device, particularly bushings (1) and/or nozzles for the production of mineral fibers, made of iron-chromium-aluminum alloy and composites thereof, and a method for producing mineral fibers which uses the device.

## Description

The present invention relates to devices particularly suitable for producing mineral fibers, to a method for producing said devices, and to the new use of a specific material for producing said devices.

Mineral fibers, more specifically basalt fibers, are of great interest in some industrial fields, such as the production of cement-based materials and reinforced thermoplastic and thermosetting composites. The use of a melted mixture or "moulding compound" (NMC), a melted mixture formed in sheets or "sheet moulding compound" (SMC), and a melted mixture for obtaining a mass to be processed or "dough moulding compound" (DMC), constituted by mineral fibers and polyester resins and workable by moulding in a press and by injection, has become widespread in recent years. In some applications, such as the production of high-pressure containers provided by so-called "filament winding", basalt fiber has replaced glass or carbon fibers, both of which are characterized by high strength and high modulus (of elasticity). Moreover, basalt fiber is suitable to provide heat and sound insulators. Finally, it must be noted that the commercial success of basalt fibers is due also, and most of all, to the lack of toxicity of these fibers for human beings, a problem which instead heavily affects glass fibers.

For years, the production of mineral fibers (including basalt fibers) has used precious metals and/or their alloys (for example platinum or platinum-rhodium alloys) as material for the bushing. Such metals suffer the disadvantage of deforming and losing resistance to plastic flow at a temperature under load, or "creep", when used at high temperatures (1150-1350°C). Moreover, platinum-based alloys react with the melts, which are rich in iron oxide (a problem which is common both to basalt fibers and to glass fibers), with consequent corrosion of the bushing, which must therefore be replaced periodically.

US 4,565,559 discloses a method for limiting the corrosion of the bushing by iron oxides. The problem is solved by eliminating the direct passage of current through the bushing (the current facilitates electrochemical reactions between the oxides that are present in the melt and the bushing proper), providing heating by conduction. However, this solution worsens the quality of the produced fiber, since a constant and uniform temperature along the entire bushing is not ensured.

WO 2005/009911 discloses, for the production of mineral fibers, an apparatus which has a microwave oven made of ceramic material for melting the silicates. Spinning is provided by means of holes formed in the bottom of said vessel.

In addition to the higher production costs of the apparatus, additional disadvantages are linked to the difficulty in heating the ceramic materials used.

Many other patents (e.g., US 6,647,747, US 6,046,666, US 4,153,438, US 4,957,525, US 4,664,688, US 4,488,891) disclose the use of Pt or Pt-Rh bushings. The widespread use of Pt/Pt-Rh is due to the fact that in the spinning temperature range of glass and basalt (conventionally 1150-1350°C), it has a high electrical conductivity which allows direct heating of the bushing. This type of heating ensures that a constant temperature is maintained along the entire bushing, a condition which is indispensable for the formation of mineral fiber.

US 2006/0,218,972 discloses a bushing block in which there is internally a conducting plate provided with holes, which is designed to keep the temperature of the molten basalt high, together with heating by magnetic induction. Such plate is suitably perforated so as to allow the passage of the melt into the spinning chamber arranged directly below the conducting plate. The bushing is in any case always provided by means of traditional materials.

Pt/Rh bushings are very sensitive to corrosion caused by iron oxides, compounds of which the rocks and silicates used as raw materials for mineral fibers are rich. Accordingly, there is a considerable wear of the bushings and there is a need for their frequent replacement (an aspect which affects production costs substantially, in view of the cost of the metals used).

The aim of the present invention is to provide a device, particularly for producing mineral fibers, which overcomes the drawbacks of the background art.

Within this aim, an object of the present invention is to provide a device, preferably a bushing or nozzles for spinning, which does not suffer problems in terms of corrosion caused by the iron oxides present in the mixtures used to produce mineral fibers.

Another object of the present invention is to provide a device which can be heated directly, maintaining the necessary uniformity of heating.

Another object of the present invention is to provide a device whose production costs are lower than those of known solutions.

Another object of the present invention is to provide a device which does not suffer the risk of melting at the temperatures usually used to produce mineral fibers, particularly basalt fibers.

Moreover, a further object of the present invention is to provide a device which is made of a material which exhibits good resistance to atmospheric oxidation at operating temperatures.

This aim and these and other objects are achieved by a device, particularly for producing mineral fibers, particularly a bushing or a device made of iron-chromium-aluminum alloy and derivatives thereof.

The aim and objects of the invention are also achieved by a method for producing mineral fibers which uses a device as defined above.

The aim and objects of the invention are also achieved by the use of an iron-chromium-aluminum alloy and composites thereof to manufacture a device suitable for producing mineral fibers.

It is understood that any characteristic that is mentioned with regard to a single aspect of the invention but can also be referred to other aspects is to be considered equally valid as regards these aspects even if it is not repeated explicitly.

Further characteristics and advantages of the invention will become better apparent from the description of the accompanying Figures, provided by way of non-limiting example, wherein:
Figure 1 is a perspective view of a rectangular bushing 1, made entirely of iron-chromium-aluminum alloy, which has, on the bottom, a plurality of nozzles (which protrude from the bushing and are visible through their small protrusion at the hole or tip 2), from the holes 3 of which the mineral melt is extruded;
Figure 2 is a perspective view of a crucible 4, which has a frustum-shaped single-filament nozzle 5 entirely made of iron-chromium-aluminum alloy arranged on its bottom;
Figure 3 is a sectional view of the crucible 4 and of the nozzle 5 of Figure 2;
Figure 4 is a perspective view of a pilot bushing 6, made entirely of iron-chromium-aluminum alloy. The bushing is provided by arranging five cylindrical nozzles 7, with a diameter of 2 mm, which end with a square tip 8;
Figure 5 is a perspective view of a bushing 9 which has a plurality of nozzles 11 with such a geometry that it can be fitted on industrial melting furnaces. It has a rectangular geometry, with two wings 10 which are necessary to allow connection to electrical terminals in order to apply the current required for direct heating of the bushing.

In one aspect, the present invention relates to the use of the iron-chromium-aluminum alloy or of its composites as a material which is alternative to Pt/Pt-Rh to provide a device suitable to produce mineral fibers.

Alloys based on iron-chromium-aluminum have excellent mechanical properties even at high temperatures. Moreover, they are good electrical conductors, an essential characteristic for uniform and effective heating of the device. Moreover, the iron-chromium-aluminum alloy (alone or in a composite) has all the advantages of the precious metals that are used conventionally, but differently from them:
a) it is characterized by substantial chemical inertness with respect to the oxidizing components that are present in mineral melts and it is totally insoluble in melts of basalt, glass, et cetera. For this reason, the iron-chromium-aluminum alloy has an absolute resistance to corrosion by these melts and therefore does not contaminate said melts or the resulting fibers. Corrosion resistance entails constancy of electrical resistivity along the transverse cross-section of the device and therefore a temperature distribution which is uniform and constant over time when the device is connected directly to an electric current supply. The chemical inertness of the iron-chromium-aluminum alloy with respect to the melts with which it is in contact ensures constancy of the dimensions of the spinning channels and therefore of the diameter of the fiber;
b) it has a good resistance to oxidation in air at the ordinary operating temperatures of the bushing (1150-1450°C);
c) if it receives suitable additives to provide composites as defined above, it has an excellent creep resistance even at high temperatures. Creep phenomena constitute a limitation to the life of conventional bushings, since they entail a size variation thereof, of the holes and in particular of the spinning channels. The effect of creep increases as the dimensions of the holes increase;
d) it has an angle of contact with the melts which is suitable for the spinning process;
e) its cost is distinctly lower than that of any other alternative existing solution, especially if compared with the costs of precious metals.

The inventors of the present invention have found that the iron-chromium-aluminum alloy is an ideal alternative for providing devices which come into contact with melts of glass, basalt and minerals in general, and in particular for manufacturing bushings and nozzles for producing fibers of glass, basalt and minerals in general.

Such material is suitable also for spinning melts which are rich in iron oxides, which are highly corrosive with respect to bushings commonly made of platinum and/or platinum-rhodium. Bushings made of this material can be accommodated within the ordinary melting furnaces used for glass, basalt and silicates in general and can be heated directly by means of the flow of electric current.

Advantageously, by using, instead of the pure alloy, one or more of its composites as defined above, some possible problems in terms of excessive ductility and creep resistance are avoided. In this embodiment, the performance of the material in the temperature range in which a bushing for mineral fibers (especially basalt fibers) works is optimized. The addition of one or more of the ingredients indicated above in the context of the definition of "composites" has the main effect of forming a second phase which acts as a reinforcement for the initial alloy.

In the present description, the expression "mineral fibers" is used to reference fibers obtained starting from a material preferably selected among: rock, preferably basalt, clay, slag (such as blast furnace slag), ceramics, silicates, preferably glass. The fibers are preferably glass or basalt, more preferably basalt fibers.

The term "fibers" is used interchangeably with the expression "rock wool" or "wools".

The fibers can be obtained according to standard methods of the field, i.e., by melting the initial material at high temperature (thus obtaining a "melt" of the material) and by extruding in bushings the molten material, which at the outlet of the hole of the bushing is transformed into fiber by means of the deformation of the molten mass and its solidification during cooling and the application of any binding agents. The melting and extrusion step can occur within a furnace to which the bushing is applied or within a crucible (made of any material known to the person skilled in the art, for this application) provided with one or more spinning nozzles on its bottom.

The fibers according to the present invention can have a diameter ranging from 6 to 100 µm and a variable length.

In another aspect, the present invention relates to a device, preferably a bushing or spinning nozzle, which is adapted to manufacture mineral fibers and is made of iron-chromium-aluminum alloy or composites thereof.

In the present description, the term "device" preferably references:
- a bushing provided with a plurality of holes for manufacturing mineral fibers, or
- any structural element which, in the context of a normal process for manufacturing mineral fibers, comes into contact with the molten material to be spun and with the atmosphere of the spinning environment and is therefore more subject to corrosion, maintenance and risks of melting.

A structural element as defined above can be a part of a bushing, so as to be physically inseparable from it, or can be detachable and autonomously replaceable. An example of structural element is a spinning nozzle. A spinning nozzle can be part of a melting crucible and can be arranged at the base of said crucible. As an alternative, a plurality of spinning nozzles can be part of a bushing as defined above. In both cases, the nozzles can be rigidly coupled to the crucible and to the bushing or can be detachable and autonomously replaceable.

The device according to the present invention is characterized substantially in that it is made of iron-chromium-aluminum alloy and composites thereof. The expression "made of" is understood here to mean that it is entirely or partly made of such material. The expression "partly made of" is understood to mean that the alloy is used at least for those parts of the device that come into contact with the melt during the spinning process.

Advantageously, the device according to the present invention is a bushing provided with a plurality of nozzles, in which both the bushing and the nozzles are made of iron-chromium-aluminum alloy or derivatives thereof.

The expression "spinning nozzles" preferably references monofilament nozzles. For the purposes of the invention, a nozzle can be joined to a bushing, can be detachable from it and therefore be periodically replaceable, or can also be applied to elements other than a bushing, such as a crucible.

The bushings according to the present invention can be monolithic bushings or a plurality of bushings. The bushings can be accommodated in ordinary melting ovens used for glass, basalt and silicates in general and can be heated directly by means of the passage of electric current.

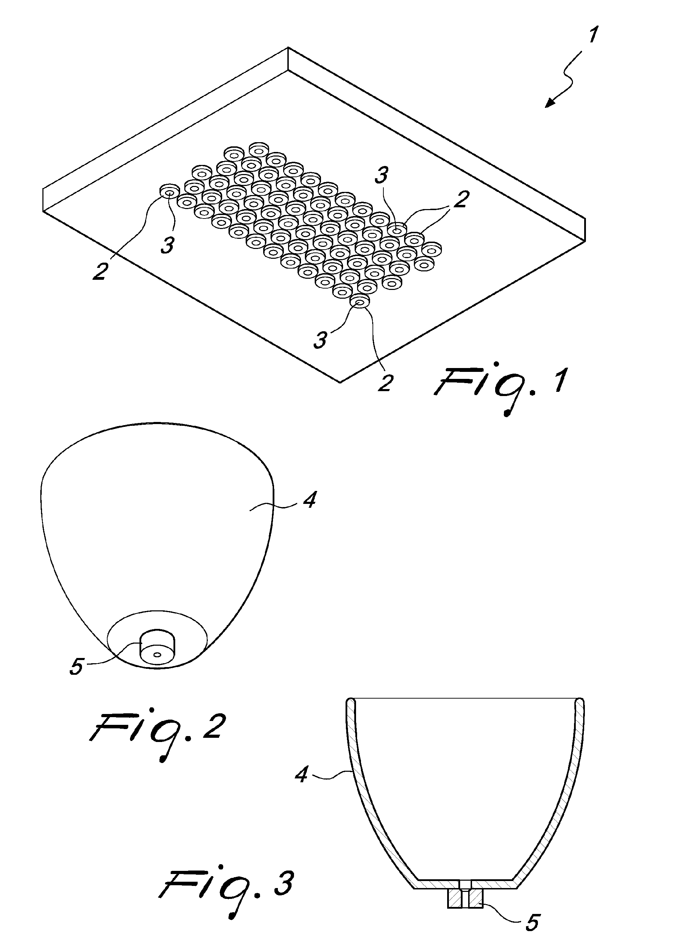

The nozzles and the bushing can be with or without a tip, i.e., the protrusion of the hole of the bushing or of the spinning nozzle (for example the element 2 of Figure 1).

The device according to the present invention is particularly suitable for manufacturing mineral fibers which contain iron oxides or fibers of glass and basalt.

In one embodiment, a bushing made of iron-chromium-aluminum alloy according to the present invention can be used to produce continuous basalt fiber. In this embodiment, the bushing can have any geometry, preferably a rectangular geometry, and is provided with a plurality of holes, whose number varies depending on the design productivity of the bushing. For example, the number of holes can range from 25 to 2500, depending on the size of the supporting frame of the bushing arranged at the base of the crucible or melting furnace. The furnace can contain a single monolithic bushing or a plurality of bushings in parallel.

The holes can have any shape, preferably cylindrical or frustum-shaped, with a diameter which is in any case smaller than 4 mm, preferably comprised between 1.0 and 3.0 mm, and a length of less than 10.0 mm. The spacing between the holes is advantageously smaller than 10.0 mm.

The spinning nozzles can be inserted on the bottom of a crucible in which the material to be spun is melted or can be applied to bushings. An example of monofilament spinning nozzle is given in Figure 2. The nozzles according to the invention are preferably cylindrical or frustum-shaped.

Preferably, the devices according to the present invention are provided by a Fe-Cr-Al alloy which comprises 15 to 30% Cr, 2 to 10% Al, and Fe to reach 100% together with inevitable impurities.

The devices according to the present invention can also be made of iron-chromium-aluminum alloy composites, which are preferably combinations of iron-chromium-aluminum and one or more ingredients selected from the group that consists of W or oxides thereof, Hf or oxides thereof, Ti or oxides thereof, Zr or oxides thereof, V or oxides thereof, Nb or oxides thereof, Ta or oxides thereof, Cr or oxides thereof, Y and oxides thereof, SiC and Al₂O₃.

In another aspect, the present invention relates to a method for providing a device as defined above.

The devices according to the present invention can be provided by machining starting from rolled sections of suitable size, regardless of the method for obtaining said rolled sections.

For example, the device according to the present invention can be obtained starting from semimanufactured components made of alloy or composites thereof, particularly ingots, with a method selected from the group that consists of:
- induction melting
- plasma melting
- mechanical alloying.

In another aspect, the present invention relates to a method for providing mineral fibers which comprises a step a) of using a device made of iron-chromium-aluminum alloy according to the present invention, as described herein.

In a preferred embodiment, step a) comprises extruding a melt of a material preferably selected among rock, preferably basalt, clay, slag (such as blast furnace slag), ceramics or silicates, preferably glass, through a device according to the invention.

In another preferred embodiment, the method for providing mineral fibers comprises an additional step b), which is simultaneous with step a), of heating directly a device according to the invention by means of the flow of electric current.

Further characteristics and advantages of the present invention will become better apparent from the description of the following preferred embodiments, intended exclusively by way of non-limiting example.

### Example 1

According to the present invention, a spinning test using nozzles made of iron-chromium-aluminum alloy was performed by means of an induction furnace in which temperature control was provided with the aid of an optical pyrometer. The susceptor used is made of silicon carbide coated with refractory, and a hole is provided on its bottom whose dimensions allow to accommodate the bushing. The basalt is melted in a crucible, as shown in Figure 2, which is made of alumina and on the bottom of which there is a hole in which a spinning nozzle made of iron-chromium-aluminum alloy is inserted. The nozzle has a cylindrical shape, with an inside diameter of 1.5 mm.

The spinning temperature during the spinning process was made to vary from 1250 to 1350°C. Platinum bushings have shown progressive shortcomings in terms of mechanical strength as the temperature increases, while the bushings according to the present invention have shown no problems.

The composition of the basalt used as a material to be melted is given in table 1:

**Table 1**

| oxide | percentage by weight (%) |
|---|---|
| Na₂O | 0.56 |
| MgO | 4.49 |
| Al₂O₃ | 18.76 |
| SiO₂ | 47.54 |
| P₂O₅ | 0.54 |
| K₂O | 1.54 |
| CaO | 10.39 |
| TiO₂ | 1.90 |
| Mn₂O₃ | 0.27 |
| Fe₂O₃ | 14.23 |
| SrO | 0.11 |

With this spinning system, a fiber production of 17 km/h with a diameter ranging from 15 to 20 µm, was obtained. The mechanical characterization of the resulting fiber provided an elastic modulus of 75 GPa and a breaking strain of 3000 MPa.

### Example 2

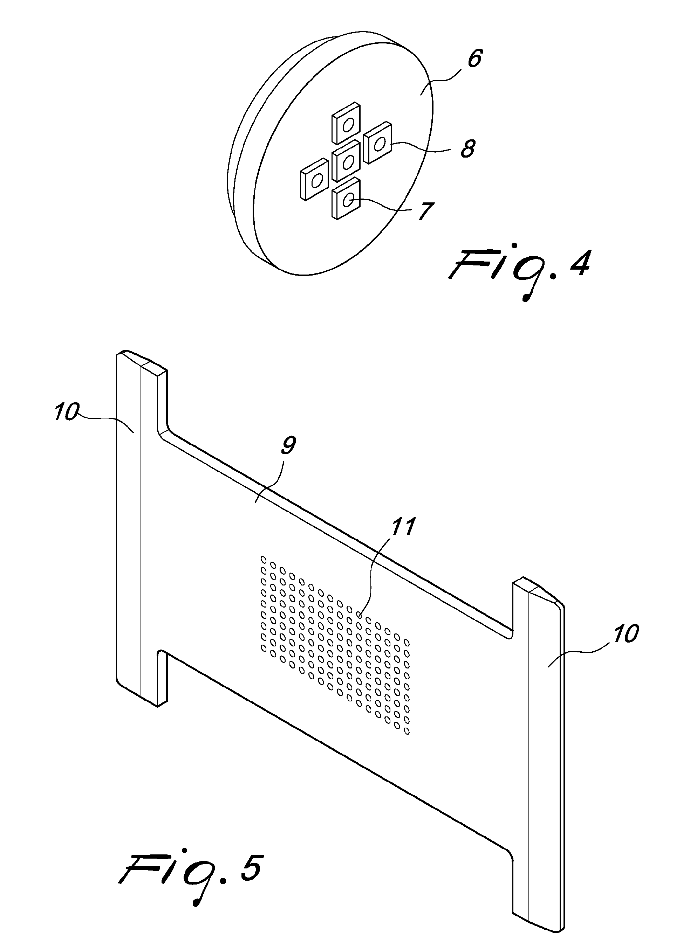

A basalt fiber was produced on a semi-pilot scale by means of the bushing shown in Figure 4.

A continuous spinning test was performed for one month with the induction system as described in Example 1 and with the bushing shown in Figure 4. The temperature of the bushing was kept between 1300 and 1350°C.

The basalt whose composition is given in Table 1 was used.

Production was 1.5 kg/h of manufactured fiber, with a diameter ranging from 10 to 20 µm. The mechanical properties of the fiber were found to be comparable with those obtained as described in Example 1.

### Example 3

A continuous basalt fiber was produced according to the present invention on a pilot scale by means of a bushing having a rectangular geometry and made of iron-chromium-aluminum alloy, with 75 holes, as shown in Figure 1, heated by means of the direct flow of current (2 amperes intensity, 10 kW power). The holes are cylindrical and flared, with a lower diameter of 2.25 and an upper diameter of 4.50 and a length of 7.6 mm. The pitch along a same row is 7.0 mm, between one row and the next it is 8.0 mm. The spinning temperature was varied from 1250 to 1350°C.

The basalt used has the composition shown in Table 1.

The resulting flow-rate is 1.5-2 kg/h; the diameter of the fiber varies from 10 to 15 µm. The literature shows that the average life of a Pt/Pt-Rh bushing ranges from 150 to 200 days. Platinum consumption ranges from 3 to 7 g per ton of produced fiber.

The spinning test described above in the present example was conducted for a time equal to 30 days; analysis of the bushing used did not reveal significant dimensional variations of the holes which could be attributed to corrosion thereof and in any case no variations that influenced the spinning process were highlighted.

### Example 4

Continuous basalt fibers were produced by using the bushing provided with 144 holes, shown in Figure 5, heated by means of the flow of current (2 amperes intensity, 20 kW power). The holes, with a diameter of 2 mm, were arranged with a spacing of 8 mm. The spinning temperature was varied from 1270 to 1350°C.

The basalt used was always the one whose composition is given in Table 1.

The resulting flow-rate was 3-3.5 kg/h, the diameter of the fiber ranged from 10 to 15 µm, with mechanical characteristics comparable to those of the fibers obtained in the examples described earlier.

After 100 days of continuous spinning, no significant dimensional variations of the holes which could be ascribed to corrosion were found.

Although only some preferred embodiments of the invention have been described in the text, it will be immediately evident to the person skilled in the art that it is possible to obtain equally advantageous and preferred embodiments.

The disclosures in Italian Patent Application no. MI2007A001154, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for producing mineral fibers, particularly a bushing or a spinning nozzle, **characterized in that** it is made of an iron-chromium-aluminum alloy or composites thereof.

2. The device according to claim 1, **characterized in that** said Fe-Cr-Al alloy comprises 15 to 30% Cr; 2 to 10% Al; Fe to reach 100% together with inevitable impurities.

3. The device according to claim 1 or 2, **characterized in that** it is a bushing provided with a plurality of holes.

4. The device according to claim 1 or 2, **characterized in that** it is a spinning nozzle.

5. The device according to claims 3 or 4, **characterized in that** said holes or said nozzle are cylindrical or frustum-shaped.

6. The device according to one or more of claims 1 to 5, wherein said mineral fibers are fibers containing iron oxides.

7. The device according to claim 6, wherein said fibers are glass or basalt fibers.

8. The device according to one or more of claims 1 to 7, wherein said iron-chromium-aluminum alloy composites are combinations of said iron-chromium-aluminum alloy with one or more of W or oxides thereof, Hf or oxides thereof, Ti or oxides thereof, Zr or oxides thereof, V or oxides thereof, Nb or oxides thereof, Ta or oxides thereof, Cr or oxides thereof, Y or oxides thereof, SiC and Al₂O₃.

9. A method for manufacturing a device according to one or more of claims 1 to 8, starting from semimanufactured components made of iron-chromium-aluminum alloy or composites thereof, particularly from ingots, where said method is selected from the group that consists of:
- induction melting
- plasma melting
- mechanical alloying.

10. A method for producing mineral fibers, comprising a step a) of using a device made of iron-chromium-aluminum alloy according to one or more of the claims 1 to 8.

11. The method according to claim 10, wherein step a) comprises extruding a melt of a material through a device as defined according to one or more of claims 1 to 8, preferably said material being selected among rock, more preferably basalt, clay, slag, ceramics or silicates, more preferably glass.

12. The method according to claim 11, further comprising a step b) of heating directly said device by means of a flow of electric current, said step b) being simultaneous with said step a).

13. Use of an iron-chromium-aluminum alloy or of composites thereof to manufacture a device as defined according to one or more of claims 1 to 8.

14. The use according to claim 13, wherein said Fe-Cr-Al alloy comprises 15 to 30% Cr; 2 to 10% Al; Fe to reach 100% together with inevitable impurities.
